# EUROPEAN PATENT APPLICATION

(11) **EP 4 650 619 A1**
(43) Date of publication of application: **19.11.2025**
(21) Application number: 24176198.0
(22) Date of filing: 16.05.2024
(51) Int. Cl.: F16F 7/108, G01F 23/296

(54) **FIELD DEVICE WITH TUNABLE DAMPING ARRANGEMENT AND CONFIGURATION METHOD**

(71) Applicant: Rosemount Tank Radar AB, 435 23 Mölnlycke (SE)
(72) Inventor: LARSSON, Stig, 433 70 SÄVEDALEN (SE); NORDMARK, Väinö, SE-432 50 VARBERG (SE); LINDBLAD, Björn, 415 07 GÖTEBORG (SE)
(74) Representative: Kransell & Wennborg KB

(57) **Abstract**

A field device (9) for sensing at least one process parameter, the field device (9) comprising a sensing arrangement (13) configured to provide a sensing signal indicative of the at least one process parameter; a housing (15) at least partly enclosing the sensing arrangement (13); and a vibration damping arrangement (17) including an elastomeric member (19) and a counter vibration weight (21) coupled to the housing (15) via the elastomeric member (19), the counter vibration weight (21) comprising: a first part (23) attached to the elastomeric member (19); and a second part (25) movable in relation to the first part (23) to allow tuning of the vibration damping arrangement (17).

## Description

### Technical Field of the Invention

The present invention relates to a field device for sensing at least one process parameter, and to a method of configuring a field device.

### Technical Background

A field device for sensing at least one process parameter may be subjected to vibration when in use. The vibration may be transmitted to the field device from a holding structure to which the field device may be attached. The vibration may be amplified substantially due to resonance.

It would be desirable to provide an improved field device, in particular a field device with improved vibration damping.

### Summary

In view of the above, an object of the present invention is to provide an improved field device, in particular a field device with improved vibration damping.

According a first aspect of the present invention, it is provided a field device for sensing at least one process parameter, the field device comprising: a sensing arrangement configured to provide a sensing signal indicative of the at least one process parameter; a housing at least partly enclosing the sensing arrangement; and a vibration damping arrangement including an elastomeric member and a counter vibration weight coupled to the housing via the elastomeric member, the counter vibration weight comprising: a first part attached to the elastomeric member; and a second part movable in relation to the first part to allow tuning of the vibration damping arrangement.

The present inventors have found that the amplification factor during vibration testing of a field device may be up to 100, depending on the configuration of the field device. To reduce the amplification factor, a vibration damping arrangement may be attached to the housing of the field device.

The present inventors have realized that improved vibration damping of a field device can be achieved by providing a vibration damping arrangement with tunable damping properties, and that the tunable damping properties can be achieved by providing a counter vibration weight, which is coupled to the housing of the field device via an elastomeric member, as a first part that is attached to the elastomeric member, and a second part that is movable in relation the to first part. Moving the second part in relation to the first part will change the vibration damping properties of the vibration damping arrangement, and may provide for a reduced maximum amplitude of the vibrations of the field device, during vibration testing. The vibration damping arrangement may, for example, surround the housing of the field device, which may provide for efficient vibration damping in several relevant directions.

The first part and the second part of the counter vibration weight may, for example, be made of metal, such as stainless steel. Such a choice of material may provide for a combination of a sufficient mass to achieve efficient vibration damping, and durability.

The elastomeric member may be fixedly attached to the first part of the counter vibration weight, such as through bonding. For example, the elastomeric member may be made of a rubber, such as natural rubber, and may be bonded to the first part of the counter vibration weight through vulcanization. Another possibility could be to make the elastomeric member of a thermoplastic elastomer (TPE).

According to an example, the vibration damping arrangement may be coupled to an outside of the housing, with the elastomeric member being arranged between the housing of the field device and the counter vibration weight. This may provide for relatively easy access to the vibration damping arrangement, facilitating tuning of the vibration damping properties of the vibration damping arrangement.

According to an example, the vibration damping arrangement may include an interface member attached to the housing and to the elastomeric member, the counter vibration weight being coupled to the housing via the interface member. The interface member may, for example, be made of metal, such as stainless steel. The interface member may be arranged closest to the housing, such as in direct contact with the housing, so that the vibrations of the interface member are substantially identical to the vibrations of the housing of the field device. The elastomeric member may be fixedly attached to the interface member, such as through bonding. For example, the elastomeric member may be made of a rubber, such as natural rubber, and may be bonded to the interface member through vulcanization. This may provide for rational and efficient production of the field device, since the vibration damping arrangement may be manufactured separately, and then joined with the rest of the field device through a simple joining process. Examples of suitable joining processes could be press-fitting, gluing, soldering, snapping, clamping, or screwing, etc. In addition, the provision of the interface member may allow for increased modularity, since different field device configuration may share the same vibration damping arrangement configuration, or the same interface member may be combined with a different elastomeric member configuration and/or a different counter vibration weight configuration, to accommodate a different field device configuration.

According to an example, the vibration damping arrangement may be detachable from the housing of the field device. For instance, if the vibration damping arrangement comprises an interface member, the interface member of the vibration damping arrangement may be detachable from the housing of the field device. This may provide for simplified fine tuning of the damping frequency spectrum of the vibration damping arrangement. For instance, the vibration damping arrangement may be temporarily attached to a fixture with a controllable vibration frequency. A number of frequency sweeps can be performed with the second part of the counter vibration weight in different positions in relation to the first part of the counter vibration weight, and the most efficient position of the second part in relation to the first part can be chosen. Thereafter, the vibration damping arrangement can be attached to the housing of the field device. This may provide for improved damping of the vibrations of the field device. In addition, if, for example, changing process conditions would result in the field device being subjected to a vibration spectrum with different properties, the vibration damping arrangement according to the present example, can be temporarily detached from the housing of the field device, and a new fine tuning may be performed as described above. Alternatively, or in combination, the vibration damping arrangement may be replaced with another vibration damping arrangement with different vibration damping properties.

According to an example, the vibration damping arrangement may comprise a locking member operable to lock the first part of the counter vibration weight and the second part of the counter vibration weight together, to prevent movement of the second part in relation to the first part. This may prevent unwanted changes in the vibration damping properties of the vibration damping arrangement, when fine tuning has been performed. For instance, the locking member may comprise a stop screw.

According to an example, the field device may extending longitudinally between a first end defined by the sensing arrangement, and a second end, and the vibration damping arrangement may be arranged closer to the second end than to the first end. The field device may be generally oblong, with the sensing arrangement being configured to interact with the process at the first end of the field device. For many configurations of such a field device, it has been found that efficient vibration damping can be achieved by arranging the vibration damping arrangement closer to the second end than to the first end of the field device.

According to an example of such a field device, the second part of the counter vibration weight may be movable to exhibit different distances between the second part of the counter vibration weight and the second end of the field device. The distances may be longitudinal distances. The second part of the counter vibration weight may be linearly movable, or movable by rotation along a helical path. For instance, the first part and the second part may be threaded.

According to an example, the field device may comprise an attachment arrangement configured to attach the field device to a holding structure at an attachment interface position; and the vibration damping arrangement may be arranged closer to the second end than to the attachment interface position, along the field device. This positioning of the vibration damping arrangement may provide for more efficient vibration damping. For even more efficient vibration damping, the vibration damping arrangement may be positioned closer to the second end, such as spaced apart from the second end by less than one quarter of a total distance between the attachment interface position and the second end of the field device. The attachment interface position may be understood as a position along a longitudinal extension of the field device where the field device mechanically interfaces with the holding structure, so that the portion of the field device extending from the attachment interface position to the second end may be deformed elastically in relation to the holding structure, which may result in the above-mentioned frequency dependent amplification of the vibration of the holding structure. The holding structure may be any structure configured to hold the field device in such a way the sensing arrangement can interact with the process. For example, the holding structure may be a part of a tank, or a pipe, or a holder over a dam or river, etc.

According to an example, the second end may be spaced apart from the attachment interface position by at least 80 mm.

According to an example, the second end may be spaced apart from the attachment interface position by at least 160 mm.

In some applications, such as in the case of a high temperature process, a relatively large distance between the attachment interface position and the second end of the field device may be required, to allow positioning of heat-sensitive equipment, such as measurement electronics, sufficiently far away from the high temperature process. This may require even more efficient vibration damping, which can be provided for by arranging the vibration damping arrangement relatively close to the second end of the field device, and/or adapting the vibration damping arrangement to the configuration of the field device.

According to an example, the vibration damping arrangement may be substantially cylindrical. This may be beneficial for providing uniform vibration damping in all directions perpendicular to the cylinder axis of the vibration damping arrangement. This configuration of the vibration damping arrangement may be particularly suitable for a field device with a substantially cylindrical housing.

According to an example, the field device may be configured for attachment to a tank in such a way that the sensing arrangement is at least partly inside the tank and the vibration damping arrangement is outside the tank.

According to a second aspect of the present invention, it is provided a method of configuring a field device having a housing, comprising: providing the field device; providing a vibration damping arrangement comprising: an interface member configured to be attached to the housing of the field device; an elastomeric member attached to the interface member; a first part of a counter vibration weight attached to the elastomeric member, in such a way that the first part of the counter vibration weight is coupled to the interface member via the elastomeric member; and a second part of the counter vibration weight movably attached to the first part of the counter vibration weight; frequency tuning the vibration damping arrangement; and fixing the vibration damping arrangement to the field device by attaching the interface member of the vibration damping arrangement to the housing of the field device. The frequency tuning may be carried out by moving the second part of the counter vibration weight in relation to the first part of the counter vibration weight.

According to an example, tuning the vibration damping arrangement may comprise temporarily attaching the interface member of the vibration damping arrangement to a fixture with a controllable vibration frequency; sweeping the vibration frequency of the fixture; and moving the second part of the counter vibration weight.

### Brief Description of the Drawings

These and other aspects of the present invention will now be described in more detail, with reference to the appended drawings showing example embodiments of the invention, wherein:
Fig 1 schematically shows an example application for the field device according to embodiments of the present invention;
Fig 2 is a schematic illustration of the field device according to an example;
Figs 3A-B schematically shows field devices according to examples, with different settings of the vibration damping arrangement;
Fig 4 is an example of the vibration damping arrangement;
Fig 5 is a flow-chart of a method according to an example;
Fig. 6 schematically illustrates tuning of the vibration damping arrangement; and
Fig 7 is a diagram illustrating an example of the effect of the vibration damping arrangement.

### Detailed Description

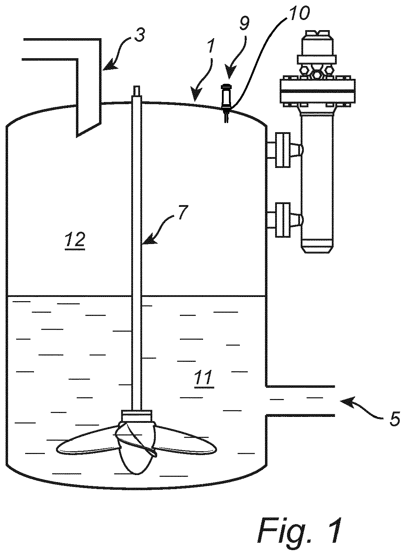

Fig 1 schematically shows an example application for the field device according to embodiments of the present invention. Referring to fig 1, a process tank 1 has an inlet 3, an outlet 5, an agitator 7, and a field device 9 of the vibrating fork type. In the example arrangement in fig 1, the field device 9 is arranged and configured to function as a limit switch, indicating when the level of product 11 in the tank 1 goes up to and passing the level of the field device 9. It should be understood that the tank 1 may be provided with at least one additional field device of the vibrating fork type, and that such (a) field device(s) may be configured to determine changes in one or more other properties of the product 11 in the tank 1. Examples of such properties may, for example, include the density, and/or the viscosity, and/or the composition of the product 11 (which may be a mixture of materials). Since methods for determining changes in such various properties based on changes in vibration properties of vibrating fork tines are, per se, well-known to one of ordinary skill in the relevant art, a detailed description of such methods is omitted. The tank 1 may be provided with additional or other field devices not shown in fig 1, such as one or more level gauges, and/or one or more flow sensors, and/or one or more pressure sensors, and/or one or more temperature sensors, etc.

A process, such as that exemplified in fig 1, may include various vibration sources. Such vibration sources may, for example, include one or more pumps, fluid flow through the inlet 3 and/or outlet 5, the agitator 7, as well as other internal or external vibration sources. Vibrations from the vibration sources may propagate to the holding structure 10 where the field device 9 is attached. In the example process of fig 1, the holding structure 10 is provided as a threaded hole in a wall of the tank 1. It should, however, be noted that many other holding structures may be possible depending on the application. The vibrations from the vibration source(s) are thus transmitted to the field device 9 via the holding structure 10. Due to the longitudinal extension of the field device 9, and the mechanical properties of the field device 9, the vibration of the field device 9 may be amplified, at least at and around a resonance frequency of the field device 9. To avoid damage to the field device 9 and/or to comply with requirements, it would be desirable to reduce the amplification of the vibration of the field device 9. This may be achieved by the field device according to examples of the present invention.

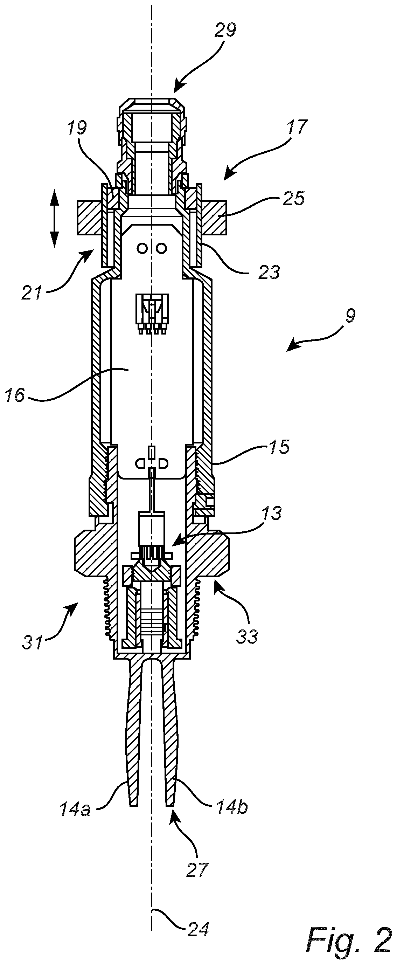

Fig 2 is a scematic illustration of a field device 9 according to an example, comprising a sensing arrangement 13, a housing 15, and a vibration damping arrangement 17. The sensing arrangement 13 may comprise at least one sensing actuator, exemplified by the tines 14a-b in fig 2, and a sensing controller for controlling operation of the sensing actuator. The sensing controller is represented by the measurement electronics 16 in fig 2. The sensing arrangement 13 is configured to provide a sensing signal indicative of at least one process parameter, which may, in the present particular example, be a presence or absence of product surrounding the tines 14a-b of the sensing arrangement 13. The housing 15 at least partly encloses the sensing arrangement 13. In the example configuration of fig 2, the housing 15 encloses the measurement electronics 16. The vibration damping arrangement 17 includes an elastomeric member 19, and a counter vibration weight 21 coupled to the outside of the housing 15 via the elastomeric member 19. The counter vibration weight 21 comprises a first part 23 attached to the elastomeric member 19, and a second part 25 movable in relation to the first part 23. By moving the second part 25 along the longitudinal axis 24 of the field device 9, the vibration damping arrangement 17 can be tuned to dampen the vibration of the field device 9 at different frequencies. Coarse tuning may be carried out by replacing the second part 25 for a lighter or heavier one, or an additional second part may be added. Fine tuning may be carried out by moving the second part 25 (or second parts) in relation to the first part 23, along the longitudinal axis 24 of the field device 9.

As is schematically illustrated in fig 2, the field device 9 extends longitudinally (along the longitudinal axis 24) between a first end 27 defined by the sensing arrangement 13 and a second end 29. For efficient vibration damping, the vibration damping arrangement 17 may be arranged closer to the second end 29 than to the first end 27. Furthermore, the second part 25 of the counter vibration weight 21 is movable to exhibit different distances between the second part 25 of the counter vibration weight 21 and the second end 29 of the field device 9.

The field device 9 according to the example in fig 2 comprises an attachment arrangement 33, here in the form of a threaded connection arrangement, configured to attach the field device 9 to a holding structure, such as a corresponding threaded connection 10 in a wall of the tank 1 in fig 1. The attachment arrangement 31 is configured to attach the field device at an attachment interface position 33, which defines an interface between the holding structure and the field device 9 in the longitudinal direction (along the longitudinal axis 24) of the field device 9. At the the attachment interface position 33, the maximum amplification factor of the amplitude of the vibration is 1. The maximum amplification factor of the amplitude increases towards the second end 29 of the field device 9, with increasing distance from the attachment interface position 33. Therefore, the vibration damping arrangement may advantageously be arranged closer to the second end 29 than to the attachment interface position 33.

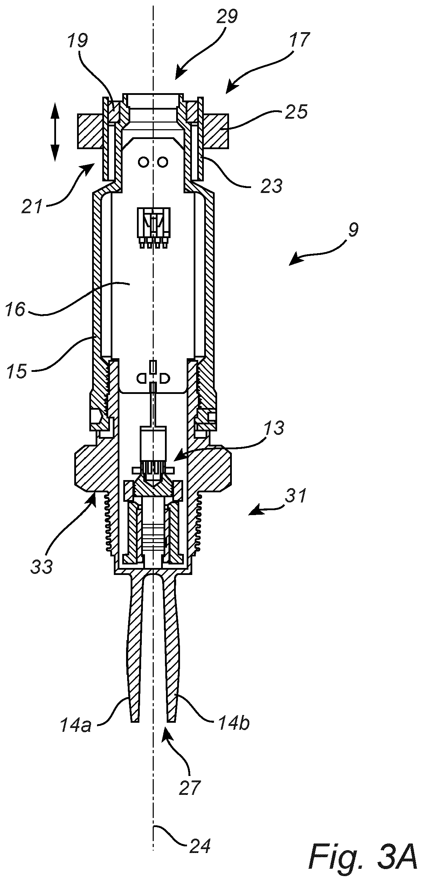

Figs 3A-B schematically shows field devices 9 according to examples, with different settings of the vibration damping arrangement 17. The field device 9 in fig 3A substantially corresponds to the field device 9 described above with reference to fig 2. The distance between the second end 29 of the field device 9 and the attachment interface position 33 for this field device may, for example, be at least 80 mm, such as about 100 mm. This configuration of the field device 9 results in vibration with a certain frequency spectrum, characterized by a first resonance frequency and a first maximum amplification factor.

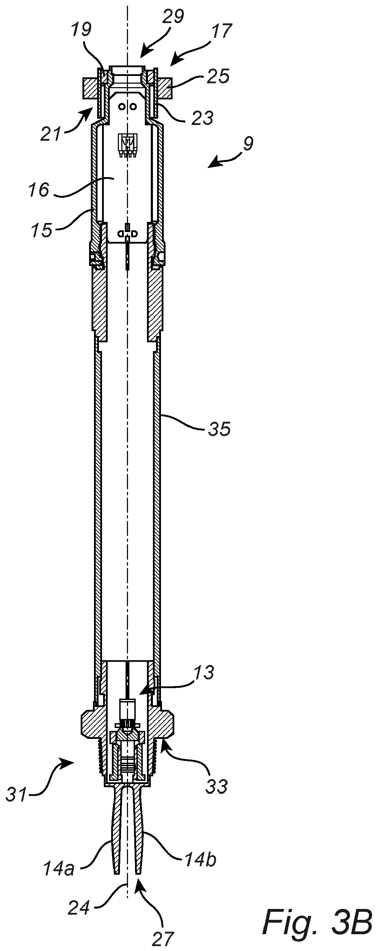

The field device 9 in fig 3B mainly differs from the field device in fig 3A in that it has been provided with an extension 35 for separating the measurement electronics 16 from a high-temperature process. Due to the extension 35, the distance between the second end 29 of the field device 9 in fig 3B and the attachment interface position 33 may, for example, be at least 160 mm. This configuration of the field device 9 results in vibration with a certain frequency spectrum, which may be different from the frequency spectrum of the field device in fig 3A, characterized by a second resonance frequency and a second maximum amplification factor.

Due to the differences in distance between the second end 29 and the attachment interface position 33 for the field devices in fig 3A and fig 3B, these field devices may thus need differently tuned vibration damping arrangements 17. This is schematically indicated in fig 3A and fig 3B by the different positions of the second part 25 of the counter vibration weight 21 in relation to the first part 23 of the counter vibration weight 21.

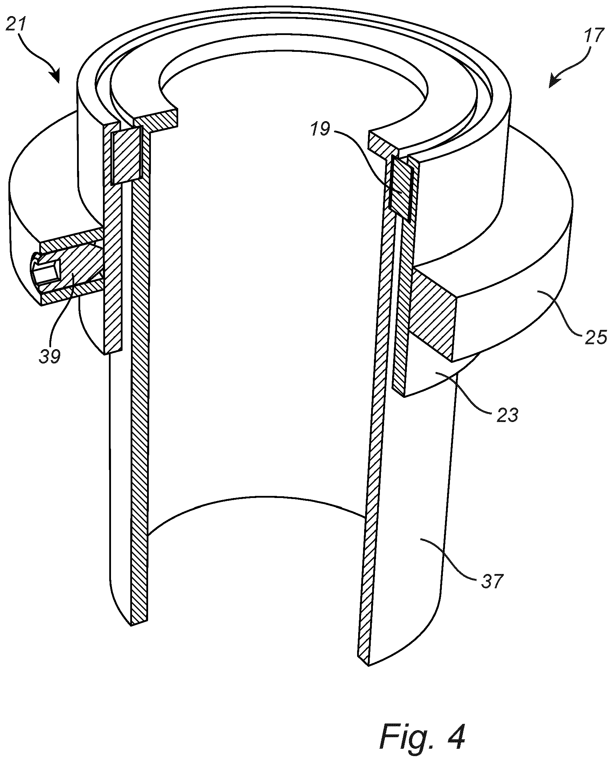

Fig 4 is an partly cut-open perspective view of an example of the vibration damping arrangement 17. In this example configuration, the vibration damping arrangement 17 comprises an interface member 37 configured to be attached to the housing 15 of a field device 9, such as the field device 9 described above with reference to fig 2 and figs 3A-B. As is schematically shown in fig 4, the interface member 37 is attached to the elastomeric member 19, which is in turn attached to the first part 23 of the counter vibration weight 21. As is schematically indicated in fig 4, the vibration damping arrangement 17 according to this example configuration additionally comprises a locking member 39 operable to lock the first part 23 and the second part 25 of the counter vibration weight 21 together. In fig 4, the locking member 39 is exemplified as a stop screw. The interface member 37 may be attached to the housing 15 using various attachment methods known to one of ordinary skill in the art. Examples include to attach the interface member 37 using one or more fasteners, to clamp the interface member 37 to the housing 15, to attach the interface member 37 by interference fit, or using an adhesive, etc. It may be advantageous to select an attachment method allowing detachment of the interface member 37 from the housing 15.

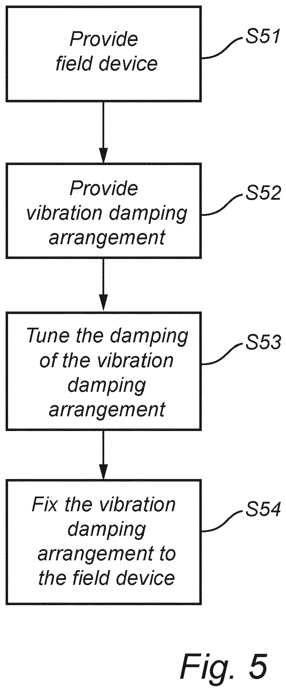

Fig 5 is a flow-chart of a method according to an example, comprising to first provide S51 a field device 9 having a housing 15, and to provide S52 a vibration damping arrangement 17 comprising an interface member 37 configured to be attached to the housing 15 of the field device 9, an elastomeric member 19 attached to the interface member 37, a first part 23 of a counter vibration weight 21 attached to the elastomeric member 19, in such a way that the first part 23 of the counter vibration weight 21 is coupled to the interface member 37 via the elastomeric member 19, and a second part 25 of the counter vibration weight 21 movably attached to the first part 23 of the counter vibration weight 21.

After having provided the field device 9 and the vibration damping arrangement 17, the method proceeds to frequency tuning S53 the vibration damping arrangement 17.

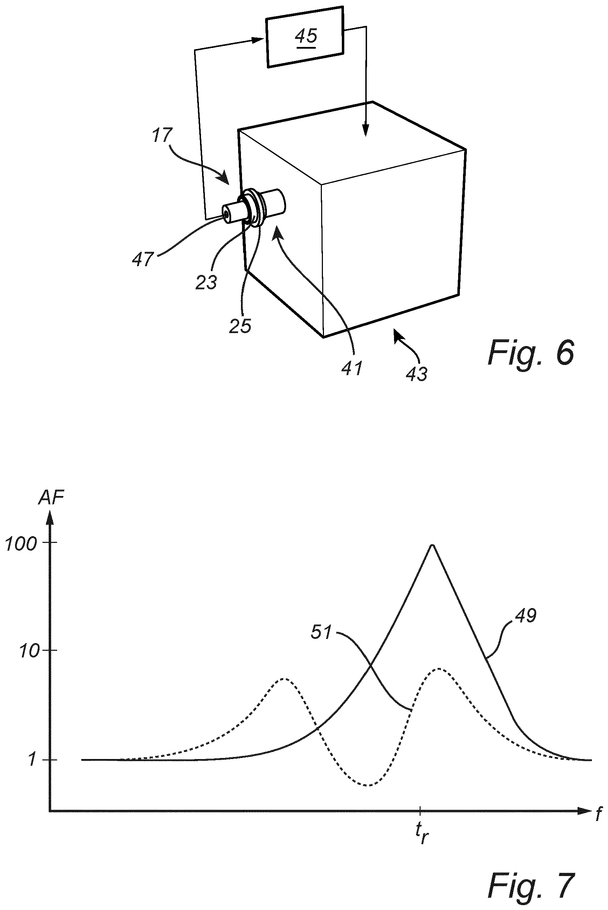

An exemplary way of frequency tuning the vibration damping arrangement 17 is schematically shown in fig 6. Referring to fig 6, the vibration damping arrangement 17 may be attached to a fixture 41, which may have similar dimensions as the field device 9. The fixture may be attached to a controllable exciter 43, which is controlled by an evaluation unit 45. To allow evaluation of the vibration spectrum of the fixture 41, the fixture may be provided with a vibration detector 47. The evaluation unit 45 may receive information about the vibration of the fixture from the vibration detector 47.

The evaluation unit 45 may control the exciter 43 to sweep the vibration frequency of the fixture 41. A vibration spectrum may be recorded, and the vibration damping arrangement 17 may be frequency tuned by moving the second part 25 of the counter vibration weight 21 in relation to the first part 23 of the counter vibration weight 21. It may also be possible to include in the frequency tuning S53 to replace the second part 25 and/or to add an additional second part 25 before fine-tuning by moving the second part(s) 25 in relation to the first part 23.

Following the tuning of the vibration damping arrangement 17, the vibration damping arrangement 17 may be fixed S54 to the field device 9 by attaching the interface member 37 of the vibration damping arrangement 17 to the field device 9.

An example effect of the vibration damping arrangement 17 will now be described with reference to fig 7. Fig 7 is a log-log diagram of amplification factor AF as a function of vibration frequency f. The solid curve 49 in fig 7 illustrates an example of the amplification factor AF, as a function of frequency f for an exemplary field device 9 without a vibration damping arrangement 17. This curve 49 may, for example, be obtained using the setup shown in fig 6. As can the be seen in fig 7, the un-damped field device 9 exhibits a maximum amplification factor of about 100 at a resonance frequency fᵣ of the field device 9.

The dashed line curve 51 in fig 7 illustrates an example of the amplification factor AF, as a function of frequency f for an exemplary field device 9 with a tuned vibration damping arrangement 17. This curve 51 may also, for example, be obtained using the setup shown in fig 6. As can the be seen in fig 7, the damped field device 9 exhibits a maximum amplification factor of less than 10.

The person skilled in the art realizes that the present invention by no means is limited to the preferred embodiments described above. On the contrary, many modifications and variations are possible within the scope of the appended claims.

## Claims

1. A field device (9) for sensing at least one process parameter, the field device (9) comprising:
a sensing arrangement (13) configured to provide a sensing signal indicative of the at least one process parameter;
a housing (15) at least partly enclosing the sensing arrangement (13); and
a vibration damping arrangement (17) including an elastomeric member (19) and a counter vibration weight (21) coupled to the housing (15) via the elastomeric member (19), the counter vibration weight (21) comprising:
a first part (23) attached to the elastomeric member (19); and
a second part (25) movable in relation to the first part (23) to allow tuning of the vibration damping arrangement (17).

2. The field device (9) according to claim 1, the vibration damping arrangement (17) being coupled to an outside of the housing (15).

3. The field device (9) according to claim 1 or 2, the vibration damping arrangement (17) including an interface member (37) attached to the housing (15) and to the elastomeric member (19), the counter vibration weight (21) being coupled to the housing (15) via the interface member (37).

4. The field device (9) according to claim 3, the vibration damping arrangement (17) being detachable from the housing (15).

5. The field device (9) according to any one of the preceding claims, the vibration damping arrangement (17) comprising a locking member (39) operable to lock the first part (23) of the counter vibration weight (21) and the second part (25) of the counter vibration weight (21) together.

6. The field device (9) according to claim 5, the locking member (39) comprising a stop screw.

7. The field device (9) according to any one of the preceding claims,
the field device (9) extending between a first end (27) defined by the sensing arrangement (13), and a second end (29); and
the vibration damping arrangement (17) being arranged closer to the second end (29) than to the first end (27).

8. The field device (9) according to claim 7, the second part (25) of the counter vibration weight (21) being movable to exhibit different distances between the second part (25) of the counter vibration weight (21) and the second end (29) of the field device (9).

9. The field device (9) according to claim 7 or 8,
the field device (9) comprising an attachment arrangement (31) configured to attach the field device (9) to a holding structure (10) at an attachment interface position (33); and
the vibration damping arrangement (17) being arranged closer to the second end (29) than to the attachment interface position (33).

10. The field device (9) according to claim 9, the second end (29) being spaced apart from the attachment interface position (33) by at least 80 mm.

11. The field device (9) according to claim 10, the second end (29) being spaced apart from the attachment interface position (33) by at least 160 mm.

12. The field device (9) according to any one of the preceding claims, the vibration damping arrangement (17) being substantially cylindrical.

13. The field device (9) according to any one of the preceding claims, the field device (9) being configured for attachment to a tank (1) in such a way that the sensing arrangement (13) is at least partly inside the tank (1) and the vibration damping arrangement (17) is outside the tank (1).

14. A method of configuring a field device (9) having a housing (15), comprising:
providing (S51) the field device (9);
providing (S52) a vibration damping arrangement (17) comprising:
an interface member (37) configured to be attached to the housing (15) of the field device (9);
an elastomeric member (19) attached to the interface member (37);
a first part (23) of a counter vibration weight (21) attached to the elastomeric member (19), in such a way that the first part (23) of the counter vibration weight (21) is coupled to the interface member (37) via the elastomeric member (19); and
a second part (25) of the counter vibration weight (21) movably attached to the first part (23) of the counter vibration weight (21);
tuning (S53) the vibration damping arrangement (17); and
fixing (S54) the vibration damping arrangement (17) to the field device (9) by attaching the interface member (37) of the vibration damping arrangement (17) to the housing (15) of the field device (9).

15. The method of claim 14, wherein tuning (S53) the vibration damping arrangement (17) comprises:
temporarily attaching the interface member (37) of the vibration damping arrangement (17) to a fixture (41) with a controllable vibration frequency;
sweeping the vibration frequency of the fixture (41); and
moving the second part (25) of the counter vibration weight (21).
